# EUROPÄISCHE PATENTSCHRIFT

(11) **EP 2 708 394 B1**
(45) Veröffentlichungstag und Bekanntmachung des Hinweises auf die Patenterteilung: **27.03.2019**
(21) Anmeldenummer: 13003533.0
(22) Anmeldetag: 12.07.2013
(51) Int. Cl.: B60J 5/06

(54) **Transportfahrzeug mit einem eine Schiebeplane aufweisenden Fahrzeugaufbau**
Commercial vehicle with a slidable side curtain
Camion de transport avec une bâche latérale coulissante

(30) Priorität: 14.09.2012 DE 102012018157
(43) Veröffentlichungstag der Anmeldung: 19.03.2014
(73) Patentinhaber: Fahrzeugwerk Bernard Krone GmbH, 48480 Spelle (DE)
(72) Erfinder: Irion, Manfred, 49757 Werlte (DE)
(74) Vertreter: Pott, Ulrich

(56) Entgegenhaltungen:
- EP-A2- 0 152 195
- DE-A1- 19 727 635
- DE-B3-102006 044 208
- GB-A- 2 126 273

## Beschreibung

Die Erfindung bezieht sich auf ein Transportfahrzeug mit einem zumindest bereichsweise über Schiebeplanen verschließbaren Fahrzeugaufbau, wobei eine Schiebeplane an ihrem in Transportfahrzeugrichtung gesehen vorderen und/oder hinteren Ende an einem Planenspannprofil mit einer Spannprofilaufnahme und/oder einer Spannwelle festlegbar ist und mit Zollkrampen aufweisenden Zollverschlusssicherung zur Festlegung der Schiebeplane mittels eines insbesondere als Verschlussteil ausgebildeten Zollverschlusses.

Transportfahrzeuge mit einem Fahrzeugaufbau mit seitlichen Schiebeplanen sind allgemein bekannt. Um solche Fahrzeugaufbauten für Dritte unzugänglich auszubilden, haben diese eine Zollverschlussvorrichtung aufzuweisen, um die Schiebeplane gegenüber einem Durchgreifen an losen Seiten zollsicher zu gestalten. Zollverschlüsse dienen dazu, verplombte Fahrzeugaufbauten so zu sichern, dass ein unerlaubter Zugriff auf das Ladegut in jedem Falle sichtbar ist. Deshalb muss ein ausreichend sicherer Durchgreifschutz an Schiebeplanenfahrzeugen vorgesehen sein. Der Durchgreifschutz ist über die volle Länge des Transportfahrzeuges abzusichern. Schiebeplanen sind in ihrer Endstellung üblicherweise zu spannen.

Dazu ist bekannt, entweder am vorderen und am hinteren Ende des Fahrzeugaufbaus jeweils Spannwellen vorzusehen oder alternativ an einer vorderen oder einer hinteren Seite des Fahrzeugaufbaus, jeweils in Fahrzeuglängsrichtung betrachtet, ein Spannprofil zum Festlegen der Seitenplane vorzusehen. Die Spannwelle ist über einen Spannmechanismus zu betätigen, um die Schiebeplane in ihrer geschlossenen Endstellung entsprechend zu spannen. Um die Zollsicherheit herbeizuführen, hat die Zollverschlussvorrichtung nicht nur ein Zollverschlussseil aufzuweisen, das entsprechende Zollkrampen an den Seitenflächen des Fahrzeugaufbaus durchsetzt. Vielmehr ist darüber hinaus auch sicherzustellen, dass der Spannmechanismus für die Spannwelle von außen her nicht gelöst werden kann. Daher ist insbesondere eine in aller Regel plattenförmige klappbare TIR-Zollsicherheit vorzusehen, die den Spannmechanismus abdeckt und der darüber hinaus von einer Zollkrampe seinerseits durchsetzt ist, durch die das Zollverschlussseil geführt ist. Der damit einhergehende Bauaufwand ist erheblich.

Aus der DE 197 27 635 A1 ist ein Pritschenaufbau mit einer Planenabdeckung bekannt, bei dem im Bereich einer seitlichen Eckrunge des Fahrzeugaufbaus ein Aufnahmeprofil angeformt ist, in das ein Keder eines Überlappungsstreifens eingebracht werden kann, um das Ende einer Seitenplane anzuordnen. Dieser Überlappungsstreifen soll zweilagig ausgebildet sein, sodass sich zwischen die beiden Lagen das Ende der Seitenplane einbetten lässt. Irgendwelche Zollverschlussseile sind jedoch nicht vorzusehen.

Aus der DE 10 2006 044 208 B3 ist eine Seitenspannvorrichtung für eine Seitenplane eines Fahrzeugaufbaus bekannt mit einem Außenrohr und einem inneren Schiebling in einer entsprechenden Profilaufnahme, in die ein Keder einer Seitenplane einzubringen ist. Eine Zollverschlussvorrichtung ist nicht vorgesehen.

Aus der EP 0 152 195 A2 ist ein Planenaufbau für einen Nutzfahrzeugaufbau vorgesehen, der über eine Spannwelle zu verspannen ist. Zollverschlusseinrichtungen sind vorgesehen.

Aus der GB 2 126 273 A ist ein Fahrzeugaufbau mit einer verschieblichen Seitenplane offenbart, die im geschlossenen Zustand über eine Spannwelle gespannt werden kann. Zur zusätzlichen Sicherung der Seitenplane ist ein Stahlseil vorgesehen, das in einer besonderen Schienenführung am Fahrzeugaufbau verschiebliche über Rollen gehalten ist und die Fahrzeugplane nach unten hin spannt.

Es ist Aufgabe der vorliegenden Erfindung, ein Transportfahrzeug der eingangs genannten Art dahingehend zu verbessern, dass ein sicherer Zollverschluss realisiert werden kann, der jedoch weniger bauaufwendig gestaltet ist.

Zur Lösung dieser Aufgabe ist ein Transportfahrzeug mit den Merkmalen des Patentanspruches 1 vorgesehen. Die Planenkrampe an der Spannwelle verhindert das Herausheben der Spannwelle und somit das Öffnen der Plane. Der Spannmechanismus wird auch durch das Zollseil gegen unbefugtes Entspannen der Plane gesichert. Der Spannmechanismus befindet sich unterhalb des Spannprofils und ermöglicht das Spannen bzw. Entspannen der Seitenplane über den Vierkant.

Damit ist ein Transportfahrzeug geschaffen, bei dem durch das einfache Vorsehen eines Zollkrampenteils innerhalb des Planenspannprofils oder an der Spannwelle an den Enden der Schiebeplane jeweils ein sicherer Zollverschluss realisiert sein kann. Ist beispielsweise nicht nur ein als Einhakleiste ausbildendes Planenspannprofil mit dem Zollkrampenverschluss vorgesehen, sondern auch eine Spannwelle, die über einen Spannmechanismus zu verdrehen ist, kann auf dieser Spannwelle das Zollkrampenbauteil drehbar angeordnet werden. Das Zollkrampenteil durchsetzt die entsprechende Aufnahme des Planenspannprofils und ragt nach außen vor, so dass ein Zollverschlussseil durch die Zollkrampenteil geführt sein kann. Nachdem die Spannwelle die entsprechende Spannendstellung erreicht hat, kann das Zollkrampenteil von innen her, d.h. von einer Stelle, die nach Endsicherung der Zollverschlussvorrichtung von außen nicht mehr zugänglich ist, gegen ein unbeabsichtigtes Verschieben nach oben nach unten gesichert werden. Eine weitere Verdrehung ist nicht möglich, da das Zollsicherungsseil auch durch den Spannmechanismus geführt wird. Dadurch kann durch diese einfache Ausbildung in baulicher Hinsicht eine sichere Zollverschlusssicherung in den Bereichen der Enden von Schiebeplanen dargestellt werden.

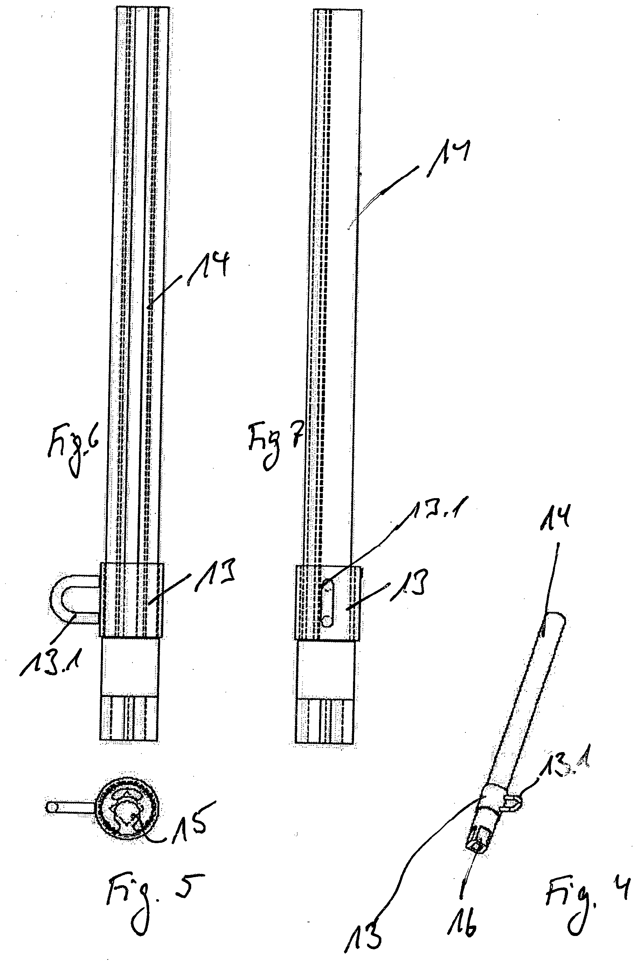

Weitere vorteilhafte Ausgestaltungen der Erfindung ergeben sich aus weiteren Unteransprüchen, der nachfolgenden Beschreibung und der Zeichnung. In der Zeichnung zeigen:

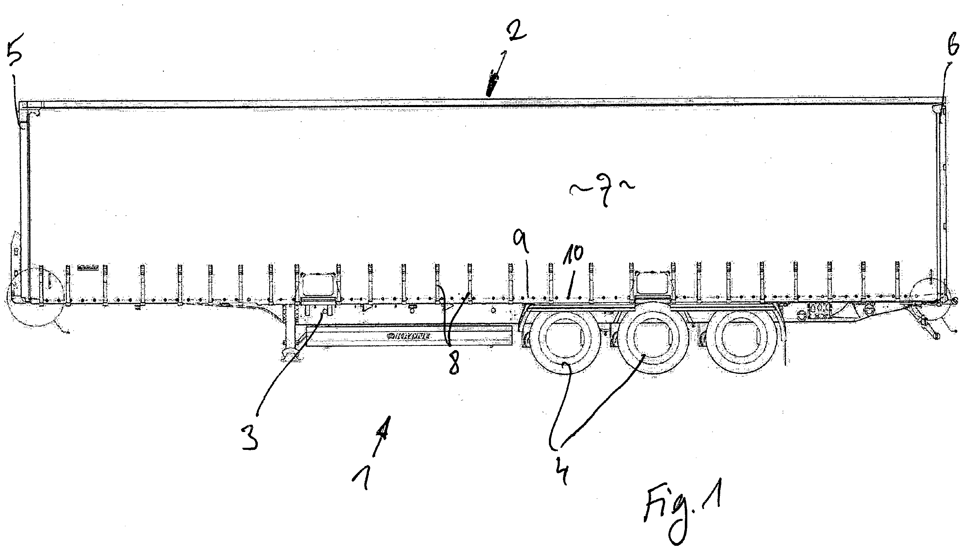

Fig. 1 in einer Seitenansicht ein Ausführungsbeispiel eines Transportfahrzeuges nach der Erfindung mit einem Fahrzeugaufbau mit seitlichen Schiebeplanen;
Fig. 2 ausschnittsweise in einer perspektivischen Darstellung ein Ausführungsbeispiel eines Planenspannprofils mit einer Einhakleiste für eine Schiebeplane;
Fig. 3 eine Querschnittsdarstellung des Ausführungsbeispiels nach Fig. 2;
Fig. 4 ein Ausführungsbeispiel einer Spannwelle als Planenspannprofil mit einer bereichsweise hülsenförmig gestalteten Zollkrampenbauteil;
Fig. 5 eine Querschnittsdarstellung nach Fig. 4, und
Fig. 6
   und 7 jeweils eine Seitenansicht bzw. eine Vorderansicht auf das Ausführungsbeispiel nach Fig. 4.

In der Zeichnung sind grundsätzlich übereinstimmende Bauteile mit übereinstimmenden Bezugsziffern versehen.

Allgemein mit 1 ist in der Zeichnung ein Transportfahrzeug 1 mit einem Fahrzeugaufbau 2 dargestellt, der über ein Fahrzeugchassis 3 und Rädern 4 auf dem Erdboden abgestützt ist. Stirnseitig sind Eckrungen 5 und 6 vorgesehen, zwischen denen sich eine allgemein mit 7 bezifferte Seitenschiebeplane erstreckt, die über Spanngurte 8 in ihrer geschlossenen Stellung mit dem Fahrzeugchassis 3 zu verspannen ist. Allgemein mit 9 ist ein Zollseil angedeutet, der entsprechende Zollkrampenaufnahmen 10 durchsetzt in den Seitenbereichen, um eine Zollverschlussvorrichtung darzustellen. In dem gezeigten Ausführungsbeispiel ist an der vorderen Stirnkante bzw. an der vorderen Eckrunge 5 ein Planenspannprofil 11 ausgebildet und im Bereich der hinteren Eckrunge 6 eine Spannwelle 14, die in den weiteren figürlichen Darstellungen näher erläutert werden.

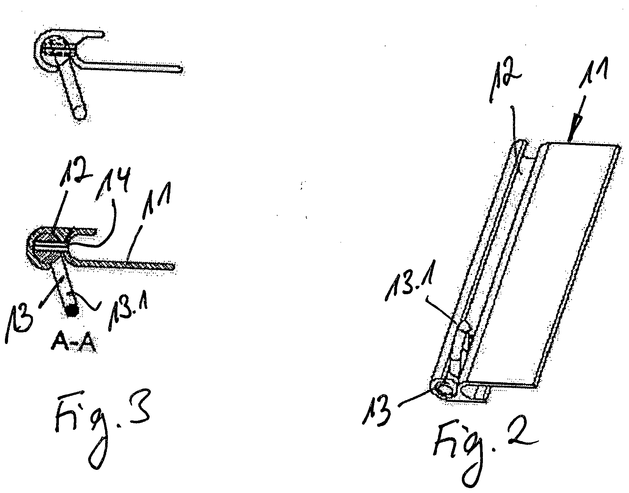

In der Fig. 2 ist schematisch und perspektivisch das zuvor angesprochene Planenspannprofil 11 mit einer als Einhakleiste ausgebildeten Spannprofilaufnahme 12 vorgesehen. Wie im Einzelnen ersichtlich ist, ist in diese Spannprofilaufnahme 12 ein Zollkrampenteil 13 eingeführt, das hülsen- bzw. rohrförmig ausgebildet ist mit einem Krampenansatz 13.1, der aus der Spannprofilaufnahme 12 herausragt und dann durch ein Zollverschlussseil durchdrungen sein kann. Mit einer Sicherung, die von innen greift, kann das Zollkrampenteil 13 gesichert werden, beispielsweise durch Spannmittel.

In den Fig. 4, 5, 6 und 7 ist eine Spannwelle 14 gezeigt, die im Bereich der hinteren Eckrunge 6 angeordnet sein soll. Diese hat eine Aufnahme 15 für ein kederförmiges Ende der Schiebeplane 7. Im unteren Bereich ist ein Vierkant 16 vorgesehen, der in einen Spannmechanismus eingreift, so dass die Spannwelle 14 zu verdrehen ist. Auf der Spannwelle 14 ist ein hülsenförmig gestaltetes Zollkrampenteil 13 mit der Zollkrampenaufnahme 13.1 vorgesehen, das im nichtlagefixierten Zustand derart auf der Mantelfläche der Spannwelle 14 angeordnet ist, dass diese relativ zu dem Zollkrampenteil 13 zwecks Spannung der Plane 7 verdreht werden kann.

Hat die Spannwelle 14 ihre Spannendstellung erreicht, kann das Zollkrampenteil 13 wiederum von außen her nicht zugänglich, also von innen her, mit einem Sicherungselement gegen eine Auf- und Abbewegung oder ein sonstiges Verdrehen gesichert werden.

Das Zollkrampenteil wird nicht gegen Verdrehen gesichert. Die axiale Verschiebung des Zollkrampenteils wird durch den als Anschlag fungierenden Adapter 16 sichergestellt. Somit lässt sich die Spannwelle nicht nach oben verschieben und die Plane also nicht lösen. Der Spannmechanismus wird durch das hindurchgeführte Zollseil gesichert und verhindert so ein Abwickeln bzw. Öffnen der Plane.

## Patentansprüche

1. Transportfahrzeug (1) mit einem zumindest bereichsweise über Schiebeplanen (7) verschließbaren Fahrzeugaufbau (2), wobei eine Schiebeplane (7) an ihrem in Transportfahrzeugrichtung gesehenen vorderen und/oder hinteren Ende an einem Planenspannprofil (11) mit einer Spannprofilaufnahme (12) und/oder einer Spannwelle (14) festlegbar ist und mit Zollkrampen (13) aufweisenden Zollverschlussvorrichtungen zur Festlegung der Schiebeplane (7) mittels eines insbesondere als Zollverschlussseil (9) ausgebildeten Zollverschlusses, **dadurch gekennzeichnet, dass** eine im Bereich des Planenspannprofils (11) vorzusehende Zollkrampe (13) als in die Spannprofilaufnahme (12) einsetzbares Zollkrampenteil (13) mit einem von dem Zollverschlussseil (9) durchsetzten Krampenansatz (13.1) ausgebildet ist, dessen Krampenansatz (13.1) aus der Spannprofilaufnahme (12) herausragt und innerhalb der Spannprofilaufnahme (12) von außen her nicht zugänglich lagefixierbar ist und/oder dass eine im Bereich einer Spannwelle (14) vorzusehende Zollkrampe als ein drehbar auf der Spannwelle (14) anzuordnendes Zollkrampenteil (13) mit einer von dem Zollverschlussseil (9) durchsetzten Zollkrampenaufnahme (13.1) ausgebildet ist, das auf der Spannwelle (14) von außen her nicht zugänglich axial fixierbar ist und im nicht lagefixierten Zustand derart auf einer Mantelfläche der Spannwelle (14) angeordnet ist, dass diese relativ zu dem Zollkrampenteil (13) zwecks Spannung der Schiebeplane (7) verdreht werden kann.

2. Transportfahrzeug nach Anspruch 1, **dadurch gekennzeichnet, dass** die Spannprofilaufnahme (12) eine Einhakleiste für die Schiebeplane (7) aufweist.

3. Transportfahrzeug nach Anspruch 1 oder 2, **dadurch gekennzeichnet, dass** die Spannwelle (14) mit einer Aufnahme (15) für ein Ende einer Schiebeplane (7) ausgebildet ist und das Zollkrampenbauteil drehbar für einen Spannvorgang der Schiebeplane (7) auf der Spannwelle (14) gelagert und in einer Endspannstellung der Schiebeplane (7), axial lagefixiert drehbar auf der Spannwelle (14) festlegbar ist.

4. Transportfahrzeug nach einem der Ansprüche 1 bis 3, **dadurch gekennzeichnet, dass** das Planenspannprofil (11) eine rohrförmige Schiebeplanenaufnahme aufweist und das Zollkrampenteil (13) als zumindest bereichsweise als rundes Stangenteil ausgebildet ist und in der Spannprofilaufnahme (12) formschlüssig einsetzbar ist.

5. Transportfahrzeug nach einem der Ansprüche 1 bis 4, **dadurch gekennzeichnet, dass** das Zollkrampenteil (13) zumindest bereichsweise hülsenförmig ausgebildet ist und die Spannwelle (14) die bereichsweise vorgesehene Hülse des Zollkrampenteils (13) durchsetzt.

6. Transportfahrzeug nach einem der Ansprüche 1 bis 5, **dadurch gekennzeichnet, dass** zur Spannung der Schiebeplane (7) die Spannwelle (14) relativ zu dem Zollkrampenteil (13) drehbar ist und die Schiebeplane (7) einen Ausschnitt zur Anordnung des Zollkrampenteils (13) aufweist.

## Claims

1. Transport vehicle (1) comprising a vehicle body (2) which can be closed at least in regions by sliding tarpaulins (7), it being possible for a sliding tarpaulin (7) to be fastened at its front and/or rear end, as viewed in the direction of the transport vehicle, to a tarpaulin clamping profile (11) having a clamping profile receptacle (12) and/or a clamping shaft (14), and comprising customs-seal devices which comprise customs clamps (13) for fastening the sliding tarpaulin (7) by means of a customs seal, which is in particular in the form of a customs cable seal (9), **characterised in that** a customs clamp (13) which is to be provided in the region of the tarpaulin clamping profile (11) is in the form of a customs clamp part (13) that can be inserted into the clamping profile receptacle (12) and comprises a clamp attachment (13.1) through which the customs cable seal (9) passes, the clamp attachment (13.1) of which protrudes out of the clamping profile receptacle (12) and can be fixed in position within the clamping profile receptacle (12) so as to be inaccessible from the outside, and/or **in that** a customs clamp which is to be provided in the region of a clamping shaft (14) is formed as a customs clamp part (13) which is to be rotatably arranged on the clamping shaft (14) and comprises a customs clamp receptacle (13.1) through which the customs cable seal (9) passes, which part can be axially fixed on the clamping shaft (14) so as to be inaccessible from the outside, and, in the non-positionally fixed state, is arranged on a lateral surface of the clamping shaft (14) such that said shaft can be rotated relative to the customs clamp part (13) in order to clamp the sliding tarpaulin (7).

2. Transport vehicle according to claim 1, **characterised in that** the clamping profile receptacle (12) comprises a hook-fastening strip for the sliding tarpaulin (7).

3. Transport vehicle according to either claim 1 or claim 2, **characterised in that** the clamping shaft (14) has a receptacle (15) for one end of a sliding tarpaulin (7), and the customs clamp component is rotatably mounted on the clamping shaft (14) in order to clamp the sliding tarpaulin (7) and, in a final clamping position of the sliding tarpaulin (7), can be rotatably fastened on the clamping shaft (14) so as to be axially fixed in position.

4. Transport vehicle according to any of claims 1 to 3, **characterised in that** the tarpaulin clamping profile (11) comprises a tubular sliding tarpaulin receptacle and the customs clamp part (13) is in the form of a round rod part, at least in regions, and can be form-fittingly inserted in the clamping profile receptacle (12).

5. Transport vehicle according to any of claims 1 to 4, **characterised in that** the customs clamp part (13) is sleeve-like at least in regions and the clamping shaft (14) passes through the sleeve, provided in regions, of the customs clamp part (13).

6. Transport vehicle according to any of claims 1 to 5, **characterised in that**, in order to clamp the sliding tarpaulin (7), the clamping shaft (14) can be rotated relative to the customs clamp part (13) and the sliding tarpaulin (7) comprises a cut-out for arranging the customs clamp part (13).

## Revendications

1. Véhicule de transport (1) avec une caisse de véhicule (2) pouvant être fermée par des bâches coulissantes (7) au moins par zones, dans lequel une bâche coulissante (7) peut être fixée, à son extrémité avant et/ou arrière vue dans le sens du véhicule de transport, à un profilé de serrage de bâche (11) avec un logement de profilé de serrage (12) et/ou un arbre de serrage (13), et avec des dispositifs de scellement douanier présentant des pattes de scellement douanier (13) pour fixer la bâche coulissante (7) au moyen d'un scellement douanier réalisé notamment sous forme de câble de scellement douanier (9), **caractérisé en ce qu'**une patte de scellement douanier (13) à fournir dans la zone du profilé de serrage de bâche (11) est réalisée sous la forme d'une pièce de patte de scellement douanier (13) pouvant être insérée dans le logement de profilé de serrage (12) avec une base de patte (13.1) traversée par le câble de scellement douanier (9), la base de patte (13.1) de ladite pièce dépassant du logement de profilé de serrage (12) et pouvant être fixée en position à l'intérieur du logement de profilé de serrage (12) de manière inaccessible de l'extérieur, et/ou **en ce qu'**une patte de scellement douanier à fournir dans la zone d'un arbre de serrage (14) est réalisée sous la forme d'une pièce de patte de scellement douanier (13) à disposer en rotation sur l'arbre de serrage (14) avec un logement de patte de scellement douanier (13.1) traversé par le câble de scellement douanier (9), ladite pièce pouvant être fixée axialement sur l'arbre de serrage (14) de manière inaccessible de l'extérieur et étant disposée à l'état fixé en position sur une surface latérale de l'arbre de serrage (14) de telle sorte que celui-ci peut être tordu par rapport à la pièce de patte de scellement douanier (13) en vue du serrage de la bâche coulissante (7).

2. Véhicule de transport selon la revendication 1, **caractérisé en ce que** le logement de profilé de serrage (12) présente une barre d'accrochage pour la bâche coulissante (7) .

3. Véhicule de transport selon la revendication 1 ou 2, **caractérisé en ce que** l'arbre de serrage (14) est réalisé avec un logement (15) pour une extrémité d'une bâche coulissante (7) et le composant de patte de scellement douanier est monté sur l'arbre de serrage (14) en rotation pour une opération de serrage de la bâche coulissante (7) et peut être fixé en rotation sur l'arbre de serrage (14) dans une position de serrage finale de la bâche coulissante (7) en étant axialement fixé en position.

4. Véhicule de transport selon l'une quelconque des revendications 1 à 3, **caractérisé en ce que** le profilé de serrage de bâche (11) présente un logement de bâche coulissante tubulaire et la pièce de patte de scellement douanier (13) est réalisée comme une pièce de barre ronde au moins par zones, et peut être insérée dans le logement de profilé de serrage (12) par complémentarité de formes.

5. Véhicule de transport selon l'une quelconque des revendications 1 à 4, **caractérisé en ce que** la pièce de patte de scellement douanier (13) est réalisée sous forme de douille au moins par zones et l'arbre de serrage (14) traverse la douille de la pièce de patte de scellement douanier (13) prévue par zones.

6. Véhicule de transport selon l'une quelconque des revendications 1 à 5, **caractérisé en ce que** l'arbre de serrage (14), pour le serrage de la bâche coulissante (7), peut pivoter par rapport à la pièce de patte de scellement douanier (13) et la bâche coulissante (7) présente une découpe pour disposer la pièce de patte de scellement douanier (13).
